# EUROPEAN PATENT SPECIFICATION

(11) **EP 3 777 257 B1**
(45) Date of publication and mention of the grant of the patent: **29.05.2024**
(21) Application number: 18800744.7
(22) Date of filing: 01.11.2018
(51) Int. Cl.: H04W 4/30, H04W 4/021

(54) **BLOCKING FUNCTIONALITY ON A SMART DEVICE**
BLOCKIERUNG DER FUNKTIONALITÄT AUF EINER INTELLIGENTEN VORRICHTUNG
FONCTIONNALITÉ DE BLOCAGE SUR UN DISPOSITIF INTELLIGENT

(30) Priority: 03.11.2017 US 201715802583
(43) Date of publication of application: 17.02.2021
(73) Proprietor: Blackout Technologies Group Ltd, London WC2N 5AP (GB)
(72) Inventor: WATSON, Charles, London SW3 3RT (GB); HADLEY, Mark, London SW3 2LQ (GB); ASTLE, Michael David, Charleston South Carolina 29412 (US)
(74) Representative: Dehns
(86) International application number: PCT/GB2018/053167
(87) International publication number: WO 2019/086880

(56) References cited:
- US-A1- 2015 237 193
- US-A1- 2017 149 795

## Description

The present disclosure relates to a method of blocking functionality on a smart device. In particular, the disclosure relates to a method of blocking apps and/or features such as a camera or browser of a smart device. The present disclosure also relates to a system and its component parts that perform the method.

Many businesses lose productivity from employees using electronic devices during work hours for personal business. There are many techniques for businesses to monitor usage of computers, e.g. PCs connected to the company network.

Bring-Your-Own-Device (BYOD) is becoming a more common practice in businesses, wherein employees use their own smart device, e.g. mobile phone, for work business. This can save costs for the company as the company does not need to supply and maintain a number of devices for their employees. However, there is the potential for lost productivity with BYOD arrangements as employees may be more likely to use their own smart device for personal use during working hours if they are allowed to be seen using their own devices for work business. If the employee's device is not connected to the company network and is, for example, using mobile internet, then it is difficult for employers to monitor whether employees are using their own smart devices for work or personal use during working hours.

Furthermore, the use of BYODs in the workplace can have serious security implications. Some apps and features are particularly vulnerable to cyber attacks, and some enable users to intentionally or mistakenly disseminate confidential business information.

US 2015/237193 A1 discloses a method according to the preamble of claim 1. US 2017/149795 A1 discloses a device, system, and method for allowing parents to view and track smart phone activities of their children, including accessing and extracting data from or about text messaging applications, social media applications, web browsers, and image-sharing applications.

US 2016/0034699 to Sasaki discloses a system in which, when a user attempts to open an information acquisition unit (e.g. a camera) on a mobile device, the device contacts a server with information regarding the device's location and the server determines, based on the location, whether the information acquisition units should be allowed to open and sends this information to the device. US 2015/0327011 to Fairbanks discloses a system and method for tracking employee time using mobile devices carried by each employee.

According to a first aspect, the invention provides a method of blocking one or more app(s) and/or feature(s) on a smart device, wherein the smart device comprises a GPS receiver and one or more wireless receiver devices. The method comprises, on the smart device: detecting, by a control app running on the smart device, movement of the smart device into or out of a predetermined region based on data received by the GPS receiver and/or one or more of the wireless receiver devices; and blocking one or more app(s) and/or feature(s) on the smart device when the smart device is within the predetermined region. The smart device is configured to communicate with a server. The method is characterised by: the smart device sending to the server a set of current smart device parameters that are currently applied on or detected by the smart device; wherein the set of parameters comprises: some or all current app permissions for the control app, the current activation state of one or more wireless receiver devices of the smart device, and the current state of a manual override switch of the control app in the smart device.

The invention therefore enables the blocking of app(s) and/or feature(s) when the smart device is in a certain region, such as the workplace. This improves security, e.g. by preventing employees intentionally or mistakenly disseminating confidential information, and reduces wasted work time due to employees using apps and/or features on their phone in the workplace.

The invention therefore allows blocking to begin when movement of the smart device into the predetermined region is detected and the apps are then blocked while the smart device is in the predetermined region.

The step of blocking may comprise blocking one or more predetermined app(s) and/or feature(s). That is, the blocking may be in the form of a "blacklist" of apps that are not allowed to be used when the smart device is in the predetermined region.

The step of blocking may comprise blocking all apps and/or features on the smart device except for one or more predetermined app(s) and/or feature(s) when the smart device is within the predetermined region. That is, the blocking may be in the form of a "whitelist" of apps that are the only apps/features allowed to be used when the smart device is in the predetermined region.

These "blacklist" and "whitelist" concepts are applicable to all the various embodiments and aspects of the invention described herein. Thus, where blocking of app(s) and/or feature(s) is described, this may utilise the particular blacklist or whitelist concepts as discussed above.

Operating systems on smart devices will usually allow restricted access to regular users, and higher level access to those with administrator or root-level privileges. The restricted access is partly to prevent a user from affecting features necessary for the stable operation of the smart device. For example, a regular user will generally be prevented from accessing the functions that determine memory allocation or how a touchscreen operates, or how the phone registers with a cellular network. These apps and features that are not accessible to a regular user (one without special access privileges) are beyond the purview of the present disclosure. That is, "apps" and "features" referred to herein generally refer to those apps and features that can be blocked by a user who does not have administrator or root-level privileges. In the industry, such apps and features are commonly referred to as "manageable" (i.e. "manageable apps" and "manageable features"), in that a regular user can manage those apps without special access permissions via the device settings or enrolment in and use of a MDM system.

As noted above, the invention blocks app(s) and/or feature(s) based on where the smart device is located. Preferably however, app(s) and/or feature(s) are blocked additionally based on whether a time is within a predetermined time period. Thus, the method may further comprise determining a current time, wherein the one or more app(s) and/or feature(s) is blocked when both the smart device is within the predetermined region and the current time is within a predetermined time period. The method may therefore comprise determining whether a current time is within the predetermined time period. In a preferred embodiment, a server with which the smart device may communicate determines whether a current time is within the predetermined time period based on the time of a clock of the server.

The smart device and a server with which the smart device may communicate may each comprise a clock. In the case of a blacklist as described above, the one or more predetermined app(s) and/or feature(s) may be blocked when both the smart device is within the predetermined region and when a time determined from one or both of the clocks is within a predetermined time period. Or, in the case of a whitelist as described above, all the apps and/or features of the smart device except for one or more predetermined app(s) and/or feature(s) may be blocked when both the smart device is within the predetermined region and when a time determined from one or both of the clocks is within a predetermined time period.

If the server comprises a clock, the method may further comprise the server determining the current time from the clock and sending the current time to the control app of the smart device.

Thus, according to a further aspect, the invention provides a method of blocking apps and/or features on a smart device that is configured to communicate with a server, wherein the smart device comprises a GPS receiver and one or more wireless receiver devices; the method comprising: determining a current time; detecting, by a control app running on the smart device, movement of the smart device into or out of a predetermined region; and blocking one or more app(s) and/or feature(s) on the smart device when the smart device is within the predetermined region.

In the case of blocking one or more predetermined app(s) and/or feature(s), the invention envisages the blocking of only one predetermined app and/or feature. However, the invention may typically include the blocking of more than one predetermined app and/or feature. Furthermore, in the case of blocking all apps and/or features except for one or more predetermined app(s) and/or feature(s), the invention envisages the exception of only one predetermined app and/or feature from the blocking. However, the invention may typically including the exception of more than one predetermined app and/or feature from the blocking. Thus, plural apps and/or features are often referred to herein. A predetermined set of apps and/or features is also referred to.

By blocking apps and/or features based on both spatial location and time, app/feature blocking can be more tightly controlled. For example, the smart device may be an employee's smart device. An employer may desire apps and/or features to be blocked whilst the employee is at work. By defining a predetermined region relating to the workplace, and defining a predetermined time relating to working hours, app blocking can be particularly accurately implemented. Accurate implementation is very important since employers would want to ensure that apps/features are correctly blocked in the workplace to provide the advantages thereof, but both employers and employees would not wish apps/features to be erroneously blocked when the employee is not at work.

Preferably, the server comprises a clock and the method further comprises the server determining the current time from the clock and sending the current time to the control app of the smart device in order to prevent a user attempting to circumvent app blocking by modifying the time of the smart device's clock.

The one or more wireless receiver devices may be any combined device having receiver functionality. For example, the wireless receiver devices may further comprise transmission functionality. The wireless receiver devices may be transceivers.

The one or more wireless receiver devices may include a Bluetooth receiver device and/or a Wi-Fi receiver device and/or a cellular network receiver device. In accordance with the above, a Bluetooth receiver device may be a Bluetooth transceiver, a Wi-Fi receiver device may be a Wi-Fi transceiver and a cellular network receiver device may be a cellular network transceiver.

The GPS and wireless receiver devices may be considered as "sensors" that provide location data.

Blocking apps/features may also be described as filtering apps/features. Blocked apps/features may be considered as disabled functionality, whilst unblocked apps/features may be considered as enabled functionality.

In line with the discussion above, the one or more pre-determined app(s) and/or feature(s) which are blocked may be termed a blacklist. The blacklist may include for example apps such as Facebook, WhatsApp and Instagram. Other apps that may be blocked may be apps that control lower-level functionality of the smart device, such as controlling the camera optics and CCD. A feature that may be blocked may include a camera. Another feature that may be blocked may include a browser. Such features may be blocked at the system level. Apps and features may together be described as "functionality" or "functions" of the smart device. In this case of this option, i.e. "blocking one more predetermined app(s) and/or feature(s) on the smart device when the smart device is within the predetermined region", the method may include blocking those app(s) and/or feature(s) except for other app(s) and/or feature(s) and indeed except for all other app(s) and/or feature(s).

Likewise, the one or more pre-determined app(s) and/or feature(s) which are not blocked (when all other apps and/or features are) may be termed a whitelist. The whitelist may include for example a work email program.

The one or more predetermined app(s) and/or feature(s) may be selected by an administrator, e.g. an employer. The administrator may select the apps and/or features at the server, the server may then send this pre-determined list of apps and/or features to the smart device.

This allows employers to ensure that apps and/or features that are not relevant for employee's work are not available on that employee's device when the employee is within the predetermined region (e.g. the workplace) and during a predetermined time period (e.g. working hours).

The smart device may typically be a smart phone, tablet or smart watch. Preferably, the smart device has an Android OS or iOS.

The data received by the GPS receiver and/or one or more wireless receiver devices provides an indication of the location of the smart device.

Thus the step of detecting movement into or out of a predetermined region based on data received by the GPS receiver and/or one or more of the wireless receiver devices comprises obtaining an indication of the location of the smart device from the data.

The step of detecting movement into or out of a predetermined region may comprise determining the current spatial location of the smart device using the GPS data and/or data from one or more of the wireless receiver devices (e.g. Wi-Fi, Bluetooth); and assessing whether this location falls within or without the predetermined region.

Determining the current spatial location and assessing whether it falls within or without the predetermined region may be part of a single step. For example, if data is received by a Bluetooth device indicating that a particular Bluetooth beacon has been detected, and if the predetermined region is defined as one in which that particular Bluetooth beacon is detectable, then by detecting the Bluetooth beacon it is known that the smart device is within the predetermined region.

The predetermined region may comprise at least one of the following areas: a 2D spatial region defined by a predetermined set of GPS coordinates; a 2D spatial region defined by a single predetermined GPS coordinate and a radius from that GPS coordinate; a region in which a predetermined network identifier is detected by the wireless receiver device. The predetermined network identifier may be a SSID or UUID. In the case of a UUID, this may be a Bluetooth Low Energy (BLE) Beacon UUID.

The step of detecting movement into or out of the predetermined region based on data received by the GPS receiver and/or one or more of the wireless receiver devices may therefore comprise determining whether a GPS coordinate of the location of the smart device is within a 2D spatial region defined by a predetermined set of GPS coordinates. It may comprise determining whether the GPS coordinate of the location of the smart device is within a 2D spatial region defined by a single predetermined GPS coordinate and a radius from that GPS coordinate. It may comprise determining whether a predetermined network identifier such as a Wi-Fi SSID or Bluetooth Low Energy Beacon UUID is detected by the wireless receiver device of the smart device. Such steps could readily be implemented in a control app by a person skilled in the art.

The predetermined region may comprise a superposition of more than one of the aforesaid areas. For example, the predetermined region may comprise both a 2D spatial region defined by a set of GPS coordinates and a region in which a pre-determined network identifier (e.g. the workplace Wi-Fi network) is detectable by the wireless receiver device. By detecting movement into or out of a predetermined region comprising both these areas, it does not matter if, for example, GPS reception is poor. This is because the app can detect movement into/out of the 2D spatial region by the network identifier.

Preferably, the method comprises the server receiving data from the device indicating the device has moved into a predetermined region, and the server determining based on this information that one or more pre-determined app(s) and/or feature(s) should be blocked or that all apps and/or features should be blocked except for one or more certain pre-determined app(s) and/or feature(s), and the server sending this decision to the device.

Therefore preferably the method may further comprise the control app sending data relating to movement of the smart device into or out of the predetermined region to the server. The method may further comprise the server determining, based on this data, whether app(s) and/or feature(s) should be blocked on the smart device. The method may further comprise the server communicating with the smart device to provide instructions to block app(s) and/or feature(s), wherein the blocking is carried out in response to these instructions.

This may allow the list of predetermined app(s) and/or feature(s) to be set centrally at the server, e.g. by an administrator. Thus, if a new app or feature is identified that should be blocked while in the predetermined region, then the administrator can add that app or feature at the server-side so that blocking of this new app/feature does not require action from the user of the smart device. This also can make it easier to ensure multiple smart devices (managed by the same server) are all blocking the correct apps.

When the server receives data relating to movement of the smart device out of the predetermined region, the server may determine whether a current time is within a predetermined time period and additionally use this to determine whether app(s) and/or feature(s) should be blocked. For example, if the smart device has moved into the predetermined region and the current time is within the predetermined time period, then the server may determine that app(s) and/or feature(s) should be blocked. The server may then communicate instructions to the smart device or the control app at the smart device to block app(s) and/or feature(s).

The predetermined time period may be selected by an administrator, e.g. an employer. The administrator may set the predetermined time period at the server. The server may send this to the smart device.

The method may further comprise the steps of:
a. the server determining whether the current smart device parameters conform to a predetermined set of parameters; and
b. when the current smart device parameters do not conform to the predetermined set of parameters, sending a notification to the smart device to instruct the smart device or a user of the smart device to adjust the current device parameters applied on the device.

This can improve the functionality of the control app and ensure user compliance with implementing the method. For example, if the server determines that the current activation state of a wireless receiver device is off when it should be on, the smart device (or user of the smart device) is instructed to turn it on. This would e.g. prevent a user trying to circumvent the blocking of apps on their device by turning off Bluetooth.

The method may comprise the step of the server sending notifications to the smart device to set or update the predetermined region.

This allows an administrator to set or amend the predetermined region at a single point, the server, and the server then updates the corresponding predetermined regions for each device (e.g. each employee's device) that is configured to perform the method.

When the current control app permissions are determined to not conform to the control app permissions of the predetermined set of parameters, the method may comprise the step of the server pushing a notification to the smart device to initiate communication with the server.

When the activation state of the GPS receiver and the or each wireless receiver device are determined to not conform to a desired activation state, the method may comprise the step of the server sending a notification to the smart device to notify a user to change the activation state of each of the GPS receiver and the or each wireless receiver device that are determined to not conform to a desired activation state.

The method may further comprise the smart device sending to the server one or more of: network identifiers for any wireless networks that are detected by the smart device, visible beacons and current GPS coordinates of the smart device.

The smart device may be associated with a first user, and the server may maintain a record of the current control app permissions for the control app on the smart device; and when the control app permissions are determined to not conform to the control app permissions of the predetermined set of parameters more than a predetermined number of times, the server sends an alert to a second user identifying the first user.

This allows auditing of an employee's compliance with the operation of the control app. If a given employee has (repeatedly) not given the correct control app permissions, then an administrator (i.e. a second user) may be alerted by the server.

The smart device may be associated with a first user, and the server may maintain a record of a frequency with which the smart device communicates with the server; and when the frequency drops below a predetermined frequency, the server sends an alert to a second user identifying the first user.

The smart device may be associated with a first user, and the server may maintain a record of the last time that the smart device communicated with the server. When the duration since the last time that the smart device communicated with the server exceeds a predetermined duration, the server may send an alert to a second user identifying the first user.

This allows another form of auditing employee's compliance with the operation of the control app, wherein an administrator may be alerted to the fact that an employee's device has not checked in recently with the server.

The method may further comprise unblocking blocked apps when movement of the smart device out of the predetermined region is detected by the control app. Unblocking may further be based on if the current time is outside the predetermined time period. In other words, the method may comprise determining when a location of the smart device moves out of the predetermined region and when the time falls outside of the predetermined time period, and when both these conditions are satisfied the method comprises unblocking (e.g. enabling) one or more app(s) and/or feature(s) that have been blocked on the smart device.

The step of detecting movement of the smart device out of a predetermined region is carried out by the control app. The smart device may send data relating to movement of the smart device out of the predetermined region to the server. The server may determine, based on this data, whether app(s) and/or feature(s) currently blocked on the smart device should be unblocked. Generally, if the smart device has moved out of the predetermined region, then the server will determine that currently blocked app(s) and/or feature(s) should be unblocked. The server will then communicate with the smart device or the control app at the smart device to provide instructions to unblock particular blocked app(s) and/or feature(s), or indeed all blocked app(s) and/or feature(s), wherein unblocking is carried out in response to these instructions.

When the server receives data relating to movement of the smart device out of the predetermined region, the server may determine whether a current time is within a predetermined time period and additionally use this to determine whether currently blocked app(s) and/or feature(s) should be unblocked. For example, if the smart device has moved out of the predetermined region and the current time is outside of the predetermined time period, then the server may determine that currently blocked app(s) and/or feature(s) should be unblocked. The server may then instruct the smart device or the control app at the smart device to unblock certain blocked app(s)/features or all blocked app(s)/features.

Regarding the blocking of apps on the smart device, this may be achieved by means of the control app. However the skilled person would readily appreciate that the particular implementation may depend on the operating system of the smart device. For example, blocking functionality will typically need to be implemented differently for an Android operating system than for an iOS. Particular examples for each of Android and iOS are described later in relation to the Figures.

In a further aspect, the invention provides a smart device according to claim 11. In a further aspect, there is provided a system comprising the smart device and a server according to claim 12.

In the system, the server and/or the smart device preferably comprises a clock. The smart device may be configured to block one or more app(s) and/or feature(s) on the smart device additionally based on whether a current time of the clock is within a pre-determined time period.

The server may preferably be configured and reconfigurable to define the predetermined region and/or the predetermined time period, and/or the one or more predetermined app(s) / feature(s). The server may preferably be configured to communicate with the smart device to set the predetermined region, the predetermined time period, and/or the one or more app(s) / feature(s).

The server may contain editable computer-executable instructions to define the predetermined region and/or the predetermined time period and/or the one or more app(s)/feature(s); and the server may contain editable computer-executable instructions to communicate with the smart device to set the predetermined region and/or the predetermined time period and/or the one or more app(s)/feature(s).

This method and system of the invention may increase the productivity of a user of the smart device by blocking distracting apps and/or features (e.g. news apps, social media apps, dating apps, gaming apps, camera functionality) while the user is in a predetermined area during a predetermined time (e.g. at work, during working hours). Information security is also increased. Advantageously, the blocking is "smart" in that the functionality returns when the user is outside the predetermined area (e.g. when commuting, or out to lunch) and is on their own personal time.

For example, an employer may institute a BYOD policy contingent on such devices having the control app installed. The employer may then configure the server to identify the predetermined area (e.g. the workplace) and the predetermined time period (e.g. working hours), and may set which apps and/or features are allowed/blocked on the user's device.

A plurality of different smart devices (e.g. belonging to different employees of the same company) may connect to the same server (e.g. managed or configured by that company). This allows the company to set and update a common policy that applies to all the smart devices being used by employees as part of the BYOD scheme.

In the system, the or each wireless receiver device may be one of a Bluetooth receiver device (e.g. a Bluetooth transceiver), a Wi-Fi receiver device (e.g. a Wi-Fi transceiver), and a cellular network receiver device (e.g. a cellular network transceiver). This allows the predetermined region to be set in a variety of different ways. Where the wireless receiver device is a Bluetooth receiver device, the predetermined region may be defined by a Bluetooth beacon. Where the wireless receiver device is a Wi-Fi receiver device, the predetermined region may be defined as the region in which a specific Wi-Fi network is detected by the smart device.

In terms of the GPS receiver, the predetermined region may be defined by GPS coordinates.

Most modern smart devices will have all three types of receiver device (GPS, Wi-Fi, and Bluetooth) which allows for the predetermined region to be defined in multiple ways, increasing the flexibility of the system.

In addition to the above described advantages in relation to information security and increased productivity, a particular technical advantage of the methods and systems of the present invention can be that the smart device may run faster and/or have longer battery life.

The server may contain editable computer-executable instructions to define the predetermined region. The server may contain editable computer-executed instructions to communicate with the smart device to set the predetermined region.

The server and/or the smart device may comprise a clock, and wherein the computer-executable instructions of the smart device may block one or more app(s) and/or feature(s) on the smart device additionally based on whether a current time of the clock is within a pre-determined time period.

The or each wireless receiver device may be one of a Bluetooth receiver device, a Wi-Fi receiver device, and a cellular network receiver device.

The server may contain computer-executable instructions causing the server to communicate with the smart device to set the predetermined region and/or the predetermined time period.

The predetermined location may be partially determined in negative terms. That is, it is possible to specify a region where apps are unblocked that is inside a region where apps are blocked. For example, a company could designate a cafeteria or break-room as a place where employees have unrestricted use of their smart devices. To do this, a first region (e.g. using a GPS latitude/longitude and a radius) may be determined; and a second region may be defined inside the first region, optionally using a beacon (e.g. a low-energy Bluetooth beacon), wherein the predetermined region is defined by the subtraction of the second region from the first region.

When the smart device can detect the Bluetooth beacon, this may cause the smart device to turn off app blocking despite the smart device being inside the first region. When the user moves (within the first region) out of range of the Bluetooth beacon, app blocking may be reestablished. Stated another way, the predetermined region may contain one or more "holes" such that a user that is inside the outermost boundary of the predetermined region, may nonetheless be outside the predetermined region by virtue of being in located in a hole within the predetermined region.

iBeacon or Eddystone beacons may be used to implement a low-energy Bluetooth beacon for defining the first region or for defining the second region (i.e. a hole in the predetermined region).

The predetermined time may be set at the server to be during working hours and on working days.

The predetermined time may be set differently for each user's smart device.

In this manner, it is not necessary that all users registered with the same server share the same predetermined times. This feature allows the control app and/or server to account for different work schedules and/or employee holidays (vacations).

The control apps may communicate with online services that provide a crash reporting system. This can allow various parties (e.g. the user, the employer, or the manager of the server) to identify bugs in the overall system.

There are various situations in which the control app, via the smart device, may be configured to flag something to the server. These situations include:
connecting/disconnecting from a Wi-Fi network, entering or exiting a predetermined region (e.g. passing a geofence), a periodic scan for beacons, periodically checking if any VPN services are running on the smart device, periodically checking if the control app has the correct app permissions, checking the Wi-Fi and Bluetooth states of the smart device, and checking the device location.

The control app may require a given time to elapse (e.g. 30 seconds) before determining the smart device 40 is inside the predetermined region.

This can ensure that the smart device 40 is indeed inside the predetermined region, and that that no brief error has been made in determining the location of the smart device.

The control app may be configured to request the necessary location permissions from the smart device to access location services.

The control app may be configured to check, at a configurable frequency, whether the required permissions and active services are available.

Location services on smart devices allow determination of the location of the smart device by detecting one or more of: cellular data signals (e.g. which cell tower(s) is/are the smart device able communicate with), Wi-Fi signals, GPS networks, and Bluetooth beacons, Access to several different location services may allow the control app to more accurately detect movement of the smart device into or out of the predetermined region.

Smart devices may be "supervised" or "unsupervised". A supervised device allows the supervisor a greater level of access to the OS that is granted to a user (where the supervisor and user are different people). For example, organisations that own a large number of smart devices that are distributed to their staff, will often register the organisation's smart devices as "supervised" to allow the company a greater level of control over the smart device than the employee. Unsupervised smart devices are smart devices that are not supervised. Unsupervised devices will typically be smart devices purchased by the employee for personal use.

The server may have a greater level of control over supervised smart devices compared to unsupervised smart devices. For example, on a supervised device running iOS, individual apps may be blacklisted or whitelisted. In an unsupervised device, it may be that blacklisting/whitelisting may only be based on broad categories of app, e.g. based on the age rating, described below.

An unsupervised smart device running iOS may be enrolled in a headless MDM which allows, for example, blocking of all apps on the smart device that have been downloaded from the Apple App Store, based on an age rating policy.

The Apple App Store currently has age ratings for apps of 4+ (i.e. suitable for users over four years old), 9+, 12+, 17+ and "No Rating". Thus, the headless MDM may, for example instruct the smart device to block all apps with an age rating above 4+.

The present disclosure provides detailed examples for implementing the method and system on smart devices running iOS make by Apple Inc. and Android made by Google Inc. The control app may work in very similar ways for different variants of these operating systems. iOS has a number of different versions. Similarly, Android has a large number of variants, in particular, variants that are modified by third parties to use the base Android system along with other functionality programmed by that third party. Thus, in another aspect, the control app is configured to run on smart devices running one of iOS, Android, and any variants thereof.

It will be readily appreciated that the various optional and preferred features of certain embodiments described above may be used separately or in any combination, and are applicable to all of the aspects of the invention.

Certain embodiments of the present invention will now be described in greater detail by way of example only and with reference to the accompanying drawings in which:
Figure 1 shows a plan view of three buildings; and
Figure 2 shows a plan view of three buildings with a circular region defined;
Figure 3 shows a flow diagram of the process followed by a control app to determine whether to block/allow apps and/or features;
Figure 4 shows a sequence diagram for updating the predetermined region from a server to the smart device;
Figure 5 shows an architecture diagram of the process of blocking apps and/or features on a smart device running the Apple iOS;
Figure 6 shows an architecture diagram of the process of blocking apps and/or features on a smart device running the Android OS;
Figure 7 shows a schematic view of the communication links between: a server, a smart device running iOS, a smart device running Android, and a (remote) control interface for the server;
Figure 8 shows a flow diagram for background operations performed by an exemplary control app;
Figures 9A and 9B show a flow diagram for operation of an exemplary control app running on iOS;
Figure 10 shows a flow diagram of the main operation loop for the exemplary control of Figure 9;
Figure 11 shows a flow diagram for checking location permissions for the exemplary control app of Figures 9A/9B; and
Figures 12A and B show a flow diagram of the initial setup for the exemplary control app of Figure 9.

The below description describes the blocking of multiple apps and/or features. However, from the above description it will be appreciated that the invention includes the blocking of only one app and/or feature. The below description simply relates to particular preferred embodiments.

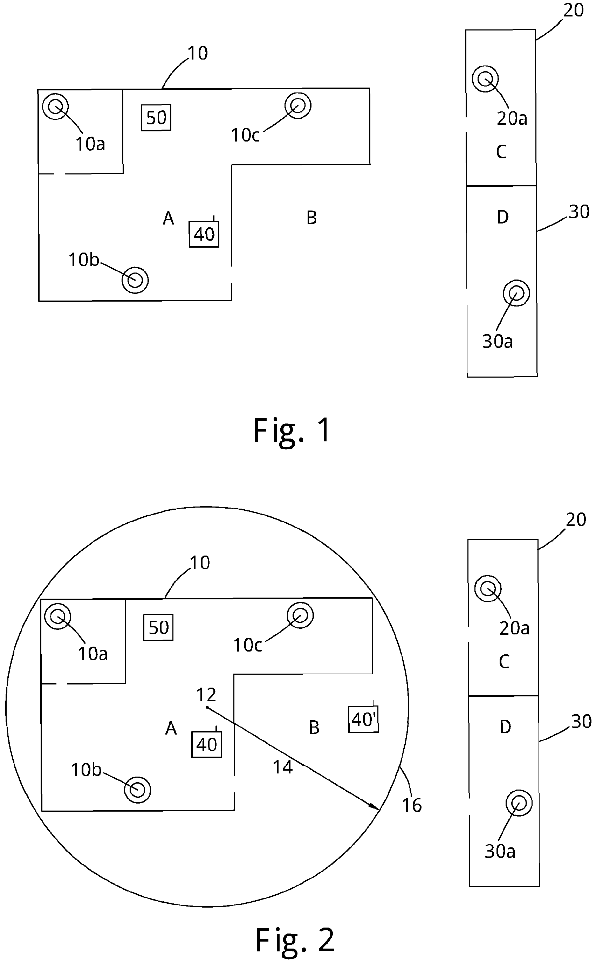

Figure 1 shows a plan view of three buildings 10, 20, 30. A first of the buildings 10 is a workplace of an employee of a company that is operating the described embodiment. The other two buildings 20, 30 may be other workplaces of different companies. A number of wireless emitters 10a-c are associated with the first building 10. The other buildings 20, 30 may also have their own wireless emitters 20a, 30a. The wireless emitters may be, for example, a Wi-Fi device such as a Wi-Fi router or Wi-Fi extenders, or a Bluetooth device, such as a Bluetooth beacon. The employee has a mobile smart device (e.g. a smartphone, tablet, laptop etc.) 40, which may be anywhere in the area shown. It is in wireless communication with server 50 within first building 10, which is operated by the company. The server (which may be referred to herein as the "Blackout Server") runs software that may be used to control access to other apps and features of the employee's smart device 40.

Figure 2 corresponds to Figure 1, except that it shows a circular region 16 centered on a point 12 defined by GPS co-ordinates.

The company based in the first building 10 wants to allow employees to use their own smart devices in the workplace while limiting access to certain apps and/or features on those devices when the employee is at the workplace and during working hours, so as to improve worker productivity. To achieve this, the employer may have the employees download a computer program (app) to their smart device(s). For example, an employee may be sent a message to their smart device inviting them to download the app from a particular link.

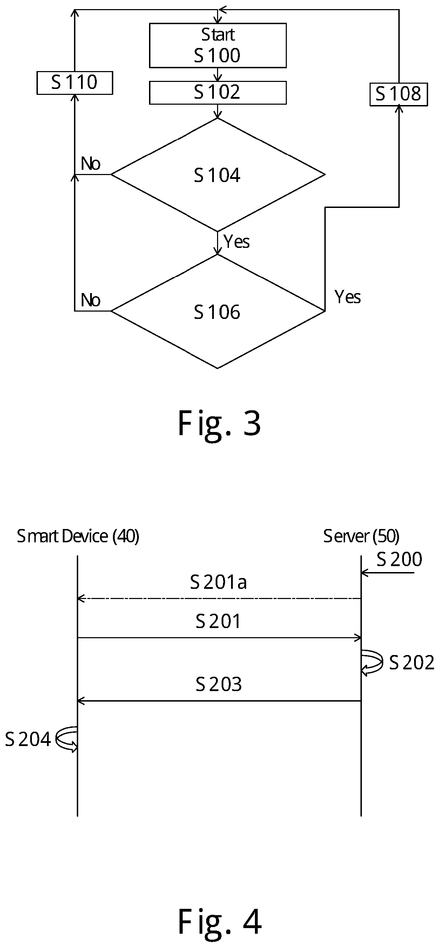

Once installed, the app (which may be termed a "control app") configures the smart device 40 to contact the server 50 in response to certain events, such as the arrival of a push notification or a detected movement into or out of a predetermined region (see below), at which point, the smart device 40 transmits to the server 50 data regarding the current state of the smart device 40. In particular, the smart device 40 sends data including: the current app permissions of the control app, the current activation state of the GPS receiver and all wireless receiver device(s), and the current state of a manual override switch of the control app in the smart device 40. These steps are discussed further below in relation to Figure 4.

The app and server 50 are configured to cooperate to perform the following steps, shown in Figure 3:
Step 100: determine a location of the smart device;
Step 102: determine the current time;
Step 104: check if the current time is within a predetermined period of time;
Step 106: check if the location is inside a predetermined region;
Step 108: if the current time is within a predetermined period of time and the location is inside a predetermined region, then a predetermined set of apps and/or features (blacklist) are blocked on the smart device or all apps and/or features except for a predetermined set of apps (whitelist) are blocked on the smart device; else
Step 110: turn off any blocking of apps and/or features (i.e. unblock those apps and/or features).

In other embodiments, step 104 may not be carried out and so step 108 may involve blocking based on the location only. These steps will be described in more detail below, referring to the embodiment where step 104 is performed.

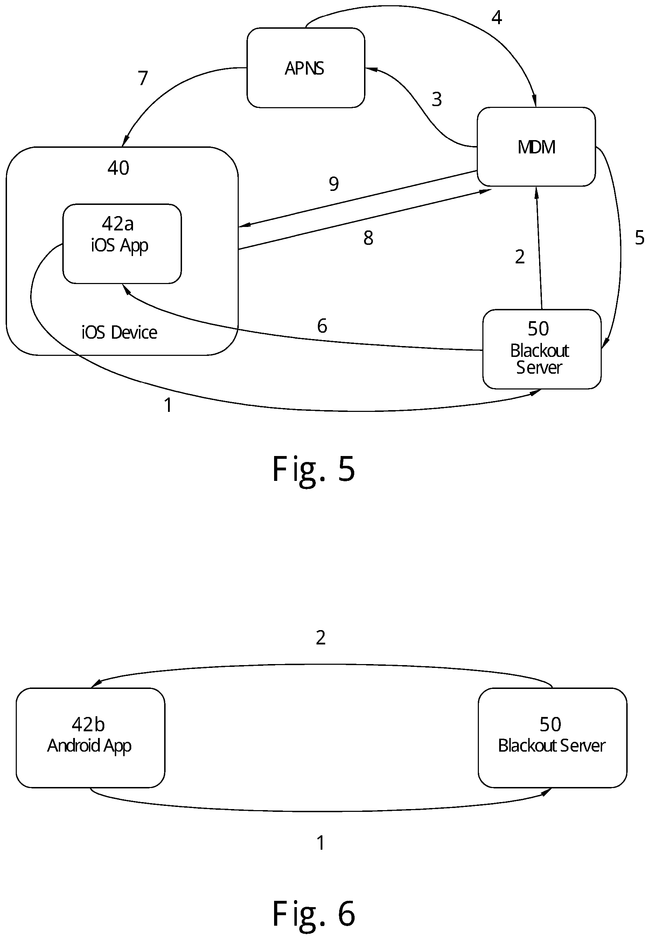

Decisions about when to activate or deactivate app and/or feature blocking on the smart device 40 are made by the software running on server 50, based on data received from the smart device. Thus, in relation to Step 100, the smart device will send data relating to the detected movement into or out of the predetermined region. The smart device 40 may also send the network identifiers for all wireless networks that are detected by the smart device 40 and any visible beacons (e.g. Bluetooth beacons). Based on the received information (Steps 104 and 106), the server 50 then communicates with the smart device or the control app at the smart device 40 to instruct the smart device 40 or the control app at the smart device 40 to block or unblock apps and/or features on the smart device 40 (Step 108). Exemplary implementations of the blocking functionality are described later for each of iOS and Android in relation to Figures 5 and 6.

As a result of the above, when an employee is, for example, in the workplace during working hours, the smart device 40 is configured (by the control app) to block user access to certain apps and/or features.

The determination of the location of the device (Step 100) is related to the definition of the predetermined region used in Step 106, so these are now discussed in more detail together.

The predetermined region may be defined in different ways. For example, in Figure 1, the employer may define the predetermined region as an area defined by a set of GPS coordinates defining the shape of the building 10. In this instance, an employee with a smart device 40 at location A would be within the predetermined region and thus, during a predetermined time period e.g. working hours, the control app would be active in blocking certain apps and/or features or allowing certain apps and/or features on an employee's smart device, as appropriate.

Alternatively or additionally, the predetermined region may be defined as an area defined by a single GPS coordinate 12 and a radius 14, thereby defining a circular region 16, as shown in Figure 2. This region may extend beyond the building 10 and consequently an employee at either location A or location B would be within the predetermined region.

The predetermined region may comprise one or more areas defined in different ways. The predetermined region may be a superposition of such areas or an aggregation of such areas. For example, the predetermined region may comprise an area defined by a set of GPS coordinates and an area defined by a single GPS coordinate and a radius. Thus, if an employee is within a pre-determined region comprising a superposition or aggregation of any of a plurality of areas thus defined, the control app on the employee's smart device 40 would be active in blocking.

Alternatively, or additionally, the predetermined region may be defined as any place at which the smart device 40 can detect a particular wireless network, e.g. when it is in range of any of wireless emitters 10a-c (Figure 1).

In this example, the predetermined region is defined as anywhere that a smart device 40 owned by an employee from the first building 10 can detect the wireless emitters 10a-c of the first building.

Smart devices can commonly detect a number of wireless emitters without connecting to any of them. The wireless emitters 20a, 30a of the second and third buildings 20, 30 are not associated with the company of the first building 10. Therefore, even if a smart device 40 detects these wireless emitters 20a, 30a, they do not define the predetermined region. Thus, the smart device 40 of an employee from the first building 10 at location C may detect wireless network 20a but, provided that smart device 40 cannot detect any of the wireless emitters 10a-c of the first building 10, then location C is outside the predetermined region. The skilled person would readily appreciate how to configure the control app to distinguish between wireless emitters defining the predetermined region and wireless emitters unrelated to the predetermined region, e.g. by virtue of a particular identifier.

Similarly, if an employee of a company from the second building 20 (which also implements this system) is at location A with their smart device 40, then their smart device 40 may detect one or all of the wireless emitters 10a-c of the first building 10 but, unless their smart device 40 can detect the wireless emitter 20a of the second building, location A is outside the predetermined region for that employee's smart device 40.

Put another way, each smart device 40 can be configured to use different methods to identify predetermined regions. Thus, a first smart device 40 may have a predetermined region defined by the GPS coordinate 12 and radius 14, shown in Figure 2. A second smart device 40' may have a predetermined region defined by its being able to detect a given wireless emitter 30a.

The control app thus gathers data relating to the location of the smart device 40 e.g. GPS data from a GPS receiver and/or data relating to the detection of a network identifier e.g. from a wireless receiver device such as a Bluetooth receiver device, Wi-Fi receiver device or cellular network receiver device. The GPS and wireless receiver devices may be considered as "sensors" that provide location data. The control app assesses, based on the location data, whether the location is within the predetermined region. If it is, the control app contacts the server 50.

The current time (Step 102) may be determined from a clock on either the server 50 or on the smart device 40. Preferably, the time is determined from a clock on the server 50 to avoid user circumvention by changing the clock on their smart device 40. The control app then determines whether the time falls within a period during which blocking is required (Step 104), e.g. during the normal working hours of the business.

Assuming that it is required, the blocking of apps and/or features (Step 108) may be effected by the control app or via server interaction with the smart device. How blocking is effected may depend on the operating system running on the smart device, e.g. iOS or Android. Embodiments of blocking functionality are described later.

In order to determine which apps and/or features are to be blocked in Step 108, a set of permissible apps and/or features may be determined as a whitelist - i.e. the employer prepares a list of apps and/or features that are allowed to be used during working hours and in the workplace, and all other apps and/or features are blocked by default.

Alternatively, the set of apps and/or features may be determined as a blacklist - i.e. the employer prepares a list of apps and/or features that are to be blocked during working hours and in the workplace, and all other apps and/or features are allowed by default.

A smart device 40 may run faster or have a longer battery life as a consequence of blocking apps and/or features in the manner provided by the present disclosure.

It is a general feature of smart device operating systems (OSs,) that any given app requires various "permissions" to interact with the device itself and with other apps. Usually, when a user downloads an app, the smart device 40 alerts the user to what app permissions are required for the proper functioning of that downloaded app. For example, it is common for apps to require internet access in order to deliver advertisements to users using the app. It is also common for an app to request access to the user's contacts stored on the smart device 40 if that app has functionality to share data with others (e.g. by sending a text message or email to other users devices from within that app).

To implement the above-described method via an app, it is important that the control app has the correct permissions.

Consequently, the server 50 is provided with a list of the required control app permissions. The control app communicates a list of current control app permissions to the server 50. The list of current control app permissions may be considered as a type of "current smart device parameters". The server 50 may check whether the current control app permissions match the list of required control app permissions. If the smart device 40 does not have the correct control app permissions, the server 50 may send a push notification to the smart device 40 to request the smart device 40 to contact the server 50. The server 50 then sends information to the control app to notify the user that they need to adjust their permissions or to cause the control app to automatically adjust the permissions. Push notifications may be performed by the Urban Airship service, for example.

Figure 4 shows a sequence diagram of this process. Actions at the smart device 40 are shown on the left and actions at the server 50 are on the right.

Step 200: a user, e.g. an administrator, sets the predetermined parameters (e.g. required control app permissions) on the server 50.

Optional step 201 a: the server 50 requests the smart device 40 to send a list of current parameters. These parameters include: current control app permissions set on the smart device 40; the current activation state of the or each wireless receiver device of the smart device 40; and the current state of a manual override switch of the control app on the smart device 40. Network identifiers for any wireless network that are detected by the smart device 40 may also be requested by the server 50.

Step 201: the control app sends the list of current parameters to the server 50, including the current control app permissions and optionally the network identifiers, in accordance with the request.

Step 202: the server 50 checks whether the current parameters conform to a predetermined set of parameters.

Step 203: if the current parameters do not conform to the predetermined set of parameters (e.g. if the current control app permissions do not conform to the required control app permissions) then the server 50 sends a notification to the smart device 40 containing the predetermined set of parameters (i.e. specifying the control app permissions required).

Step 204: the smart device 40 then applies the parameters or requests a user to apply the predetermined set of parameters, as required. Thus, since the parameters include current control app permissions, the smart device 40 applies the predetermined control app permissions or requests the user to do so.

If a user persistently has the incorrect permissions, this could indicate that the user is attempting to circumvent the app when at the workplace during working hours. Thus, an audit method may be implemented in which, if the app permissions for a given smart device 40 are determined to be incorrect more than a certain number of times (e.g. 5 times, or on 5 different working days), the server 50 may send an alert to a second user, e.g. a supervisor at the firm, to identify the smart device 40 and its owner and alert the second user that this person may be trying to circumvent the control app's functionality.

Alternatively, a user may attempt to circumvent the control app by preventing the control app from contacting the server 50 (e.g. by disabling all wireless communication systems on their smart device 40). Thus, the server 50 may store either or both of a frequency with which the control app connects to the server 50 and a time (duration) since the smart device 40 last connected to the server 50. If the frequency of contact is too low, the server 50 may alert a second user, e.g. a supervisor that the user may be trying to circumvent the control app. If the time since the last communication from the control app is too long, the server 50 may alert a second user, e.g. a supervisor, that the user may be trying to circumvent the control app.

As mentioned previously, the particular implementation of the method and system will depend on the operation system running on the smart device 40. In particular, the implementation of the blocking functionality will be different for each of iOS and Android.

An implementation of the control app 42a that is configured to run on iOS produced by Apple Inc. is described below with reference to Figure 5. It has no capability to directly block or unblock apps and/or features (in other words, to activate or deactivate app filters) or to directly determine the state of blocking (i.e. the state of filters). Instead, it relies on the server side elements for this. iOS smart devices 40 may be enrolled in a Mobile Device Management system implemented by the server 50. This allows the MDM system to manage the smart device. The smart device 40 may therefore be termed a "managed device".

An implementation of the control app 42b that is configured to run on the Android OS produced by Google Inc. is described below, with reference to Figure 6. In contrast to the iOS system, it is entirely responsible for the implementation of blocking (i.e. implementing filters to control blocking/unblocking of certain apps/features). This is because, on Android, apps have a much higher potential control over other apps

Considering first the iOS embodiment, Figure 5 shows an architecture diagram of the process of blocking apps on a smart device 40 running the Apple iOS. In this embodiment, iOS smart devices 40 having the control app 42a installed thereon are enrolled in a Mobile Device Management system implemented by a server 50. The server uses the iOS MDM features to control the functionality available (e.g. the apps and/or features that are blocked / not blocked) on managed devices as discussed above.

In iOS, it is possible for a device (e.g. smart device 40) to be enrolled in either one or zero MDM systems at a time. Enrolling in an MDM system allows the MDM system to manage the smart device 40 in various ways including disable/enabling apps, the camera, and the Safari web browser. There are two mechanisms of control. The MDM System can require a device to apply or remove any number of 'Configuration Profiles'. Disabling apps, the camera, and the Safari browser are all consequences of applying Configuration Profiles.

MDM Systems can also apply Commands to devices. Commands are typically changes of state like making a smart device 40 install a certain app or putting the device into 'lost' mode.

The control app gathers data relating to the location of the smart device 40 as previously described, e.g. using sensors such as a GPS receiver, Bluetooth receiver device, Wi-Fi receiver device or cellular network receiver device. Movement into or out of a predetermined region can be detected based on this sensor data as previously described, and this enables the MDM to be instructed to set the allowed functionality of the device (e.g. if/what apps are to be blocked) on the managed device. In terms of specific implementation, depending on the exact version of iOS running on the smart device 40 and the level of allowed management, the MDM may instruct the smart device 40 to install or remove Configuration Profile(s) that control the availability of apps and/or device features.

The process of blocking apps is illustrated in Figure 5.

The flow of operations is as follows:
Step 1: An event occurs which causes the control app 42a, via the smart device 40, to contact the server 50 (ref 1). This event may be detection, by the control app 42a, of movement of the smart device 40 into or out of a known region (defined e.g. by GPS coordinates or by proximity to/detection of a wireless network etc.). Alternatively, the event may be a periodically scheduled event, such as a daily instruction to contact the server 50. The control app 42a sends at least: the current app permissions of the control app 42a, the current activation state of the GPS receiver and all wireless receiver device(s), and the current state of a manual override switch in the smart device 40. If the control app 42a has detected movement of the smart device 40 into or out of the region, the control app will communicate this to the server 50.
Step 2: The server 50 receives the information and determines, based on that information and the time according to the server 50 clock, which if any apps and/or features on the smart device 40 should be blocked. The server 50 sends an instruction 2 to the MDM containing a list of which, if any, apps should be blocked on the smart device 40.
Step 3: The MDM instructs (ref. 3) the APNS to send a "wake up" message 7 to the smart device 40.
Step 4: The APNS acknowledges (ref. 8) the send-message instruction to the MDM.
Step 5: The MDM acknowledges (ref. 9) the instruction from the server 50.
Step 6: The server 50 returns (ref. 6) the current app permissions of the control app 42a, the current activation state of the GPS receiver and all wireless receiver device(s), and the current state of a manual override switch to the smart device 40.
Step 7: The APNS sends a "wake-up" message (ref. 7 again) to the smart device 40. This is asynchronous with step 6.
Step 8: The smart device 40, on receipt of the "wake-up" message from the APNS, contacts the MDM (ref. 8 again) to retrieve a list of what functionality (apps and/or features) which should be blocked or unblocked on the smart device 40. Blocked functionality may also be considered as disabled functionality; unblocked functionality may be considered as enabled functionality. So, blocked apps/features may also be considered as disabled apps/features; unblocked apps/features may also be considered as enabled apps/features.
Step 9: The MDM sends (ref. 9 again) to the smart device 40 a list of what functionality (apps and/or features) should be blocked/unblocked (disabled/enabled) and the smart device adjusts its settings accordingly.

As noted above, in an alternative embodiment, the app 42b may be running on the Android OS. The control app for Android may have a high level of permissions to affect the operation of other aps. There is currently variation in the field of supported Android OS versions and devices that may require use of a blend of techniques to achieve the app and/or feature blocking. The control app configured to run on Android may achieve app blocking through two approaches:
1. Accessibility Services. The control app 42a leads the user through the process of granting permission for the control app to detect when other apps go into the foreground and to 'draw over' them to prevent use.
2. VPN Services. The control app 42a will also prompt the user to grant the permissions necessary to prevent blocked apps from communicating directly with any networks.

Depending on their availability on a device's specific version of the Android OS, the control app 42a may use a blend of Android system services to prevent interaction with blocked apps by way of the main user interface, notifications, or other forms of app messaging. These include Accessibility Services, VPN Services, and access to the list of running processes.

Currently, on Android, apps have a much higher level of potential control over other apps on the same smart device (e.g. smart device 40). For this reason, an implementation of the control app configured to run on Android does not require the same device-wide influence as in the iOS case. The control app running on Android instead requires a high level of permissions to affect the operation of other apps. Blocking the use of the browser and camera may be effected by blocking the apps used for opening those functions. For these devices, the process of contacting the server 50 and blocking apps and/or features may be implemented according to the following process illustrated in Figure 6:
Step 1: An event occurs which causes the control app 42b, via the smart device 40, to contact (ref. 1) the server 50. The control app 42b sends at least: the current app permissions of the control app 42b, the current activation state of the GPS receiver and all wireless receiver device(s), and the current state of a manual override switch in the smart device 40. If the control app 42b has detected movement of the smart device 40 into or out of the region, the control app will communicate this to the server 50.
Step 2: The server 50 receives the information and determines therefrom which if any apps on the smart device 40 should be blocked. The server 50 replies (ref. 2) to the smart device 40 with a list of which, if any, apps and/or features should be blocked on the smart device 40. The control app 42b then applies these blocks on smart device 40.

Depending on the availability of Android system services on the specific version of the Android OS running on the smart device 40, a blend of system services is used to prevent interaction with blocked apps and/or features by way of the main user interface, notifications or other forms of app messaging. These include Accessibility Services, VPN Services and access to the list of running processes.

Some embodiments of the disclosure enable blocking of functionality such as a camera and/or a browser (e.g. the default browser). In an implementation of the control app for a smart device 40 running iOS, the camera or browser (e.g. the Safari browser) can be disabled at the system level. In other words system-level blocking is carried out. This may be done by the server contacting the smart device (not the control app) and instructing the smart device to block/unblock certain features such as the camera or browser (i.e. change the enabled/disabled functionality). This would be a simple implementation matter for the skilled person. Alternatively, an app which operates the camera or a browser app may be blocked as part of the above described app-blocking. In an implementation for a smart device 40 running Android, system-level blocking is not carried out. Instead, the browser and camera apps are blocked from opening. This is extended app-level blocking.

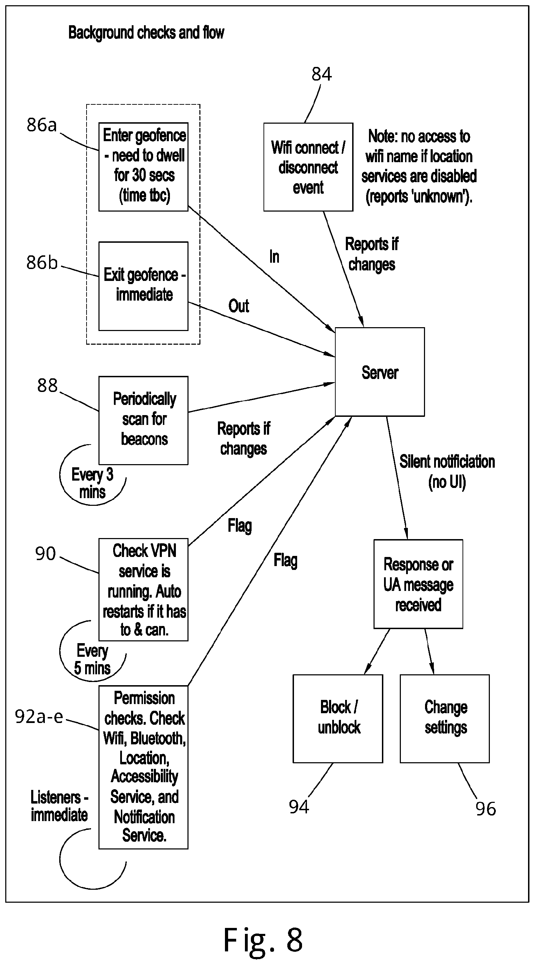

In one embodiment of the invention, when a user (e.g. an employee) wishes to make use of the control app (e.g. as a condition of a BYOD policy by the employer), the user can download the control app and register their smart device 40 with the server 50, such that the smart device 40 receives the correct settings regarding blocked apps and/or features, allowed apps and/or features, predetermined area, predetermined time etc. as set on the server 50, e.g. by the employer. On successful registration, the control app fetches the current configuration from the server 50 and then goes into an event loop. In this event loop, the control app contacts the server when a particular event occurs, e.g. when relevant sensor data has changed, or when it has been a particular time since the last contact. Figure 8, which will be discussed in detail below, shows a number of different events that each cause the smart device 40 to (try to) contact the server 50.

More specifically, non-urgent event types may include movement of the smart device 40 from or into the proximity of the predetermined region and the current app foreground in use by the user. Urgent event types may be the receipt of a remote push notification from the server 50 and/or when a user changes state of the manual override switch in the UI of the control app.

When any of the above events occur, the control app will gather all relevant data (list of visible beacons, current GPS coordinates, current network SSID etc.), all relevant device states (permissions, activation state of Bluetooth etc.) and send it along with the current state of the manual override switch to the server 50. The server 50 will reply with the full current correct configuration and the expected state of app blocking (i.e. filter activation).

Part of the server 50 configuration will be a minimum amount of time the control app should wait before contacting the server 50 in response to a non-urgent event. This will be configurable on a per client (e.g. per employer) basis and will allow administrators to achieve the right balance of app blocking latency and system load and device battery impact.

In terms of the control app contacting the server 50 after a particular time has elapsed since the last contact, the control app runs in the background on the smart device 40, reporting information about the smart device's 40 state to the server with a frequency determined by the server 50.

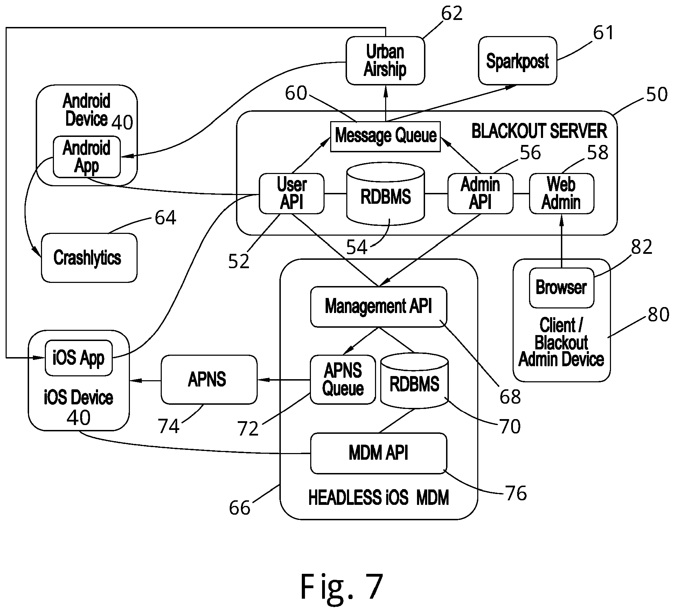

Figures 7-12 show detailed implementations of the control app running on smart devices 40.

Figure 7 shows a high-level view of the system showing the communication links between an Android smart device 40 and the server 50, and between an iOS smart device 40 and the server 50 (and a MDM 66), and between a browser or dedicated administrator's device (belonging to, for example, the employer) and the server 50.

The server 50 shown in Figure 7 contains a number of different modules for providing different functionality. These include a user API 52, a relational database management system (RDBMS) 54, an administrator API 56, and a Web Admin interface 58. The Web Admin interface may allow a user (e.g. an employer) to access the server 50 remotely to set the specific policies (predetermined times, predetermined areas, whitelists, blacklists etc.) for smart devices 40 registered with that server 50.

In this embodiment, the server 50 implements a message queue 60 for sending messages/updated to users' smart devices 40. The messaging queue 60 is implemented using the Urban Airship push notification system 62. The message queue 60 also communicates with the Sparkpost emailing service 61. The push notification system 62 communicates with the control app running on user's smart devices 40. The control apps communicate with Crashlytics 64, which is a service providing a crash reporting system. Management of smart devices 40 running iOS is routed through a Mobile Device Management (MDM) system 66, as described above. The MDM 66 comprises a management API 68, a relational database management system (RDBMS) 70, and an Apple Push Notification Service (APNS) queue 72, which communicates with the APNS 74, which, in turn, communicates with the smart device 40. The iOS device 40 communicates with a MDM API 76 in the MDM 66. An administrator communicates with the Web Admin interface 58 via a browser 82 running on a client device 80 (e.g. a PC)

Figure 8 shows a flow diagram showing a set of processes (shown in boxes to the left and at the top of the figure) that run in the background in an implementation of the invention (i.e. aspects not visible to the user of the smart device 40). This depicts situations in which the control app, via the smart device 40, communicates with the server 50 to flag some event detected by the control app. These situations are: the smart device 40 connecting to/disconnecting from a Wi-Fi network 84, the smart device 40 entering or exiting a predetermined region (e.g. geofence) 86a,86b, a periodic scan for beacons 88 by the smart device 40, periodically checking if any VPN services are running 90 on the smart device 40, periodically checking if the control app has the correct app permissions 92a, checking the Wi-Fi 92b and Bluetooth 92c states active on the smart device 40, and checking the smart device 40 location 92d.

The control app implements a dwell time of 30 seconds for determining that the smart device 40 has indeed entered the predetermined region before implementing app blocking. When exiting the predetermined region, the app immediately unblocks blocked apps.

The periodic scan for beacons 88 occurs every 3 minutes. The checking to determine if any VPN services are running 90 on the smart device 40 occurs every 5 minutes. In this step 90, if required and able, the control app restarts the VPN service.

The control app implements listening subroutines to immediately determine if the correct app permissions are implemented 92a, checking the state of Wi-Fi 92b and Bluetooth 92c states, checking the OS's Accessibility settings 92d and Notification settings 92e.

When required, the server 50 sends silent notifications to the control app to block/unblock apps 94 or to alter settings 96 of the control app.

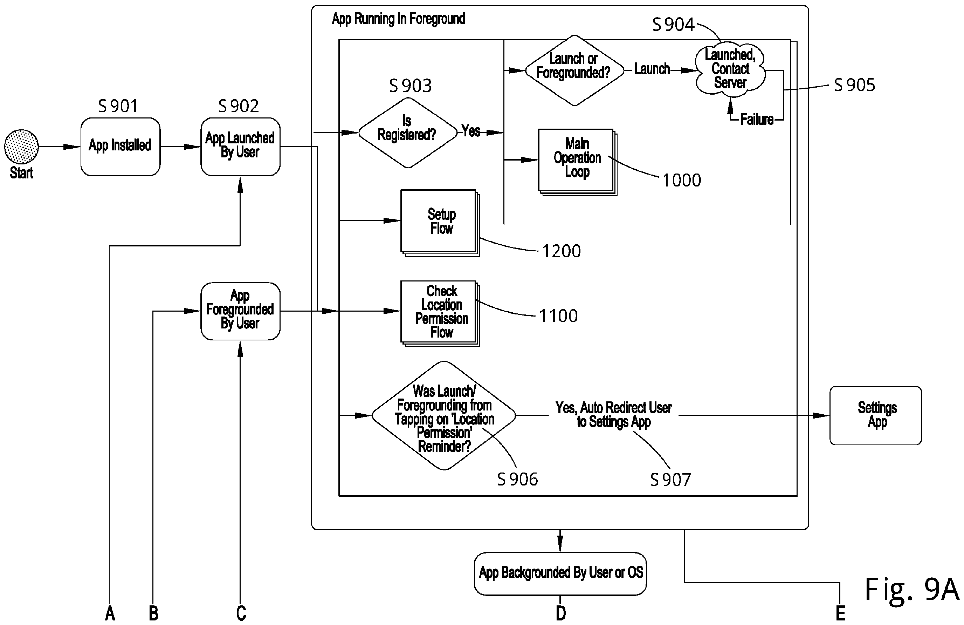

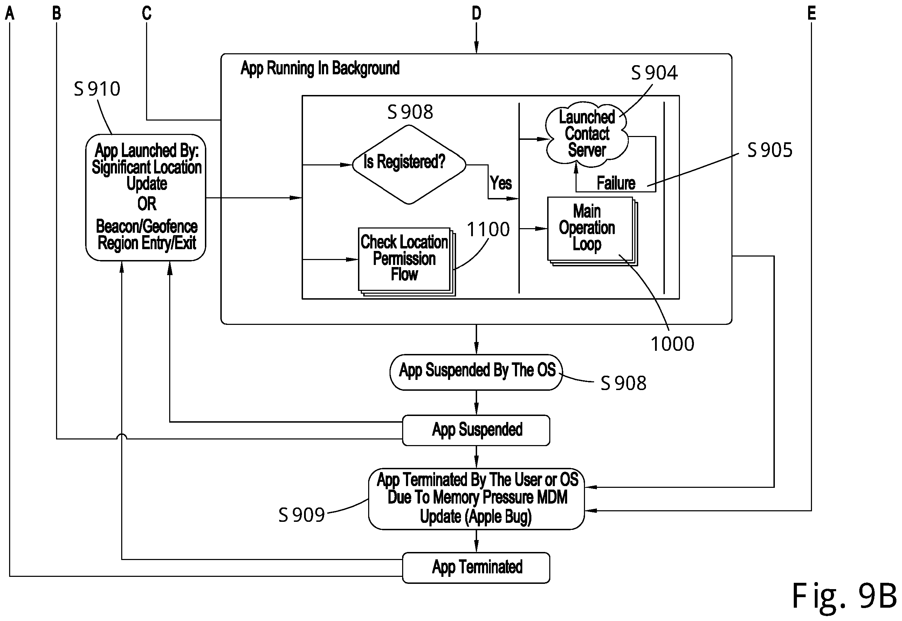

Figures 9A and 9B shows a flow diagram of the running cycle of the app on a smart device 40 running iOS starting from first installation of the control app on an iOS smart device 40. (Figures 9A and 9B are parts of the same flow diagram split over two pages. To clearly show the links, several flow arrows extending from steps shown in Figure 9A are marked A-E, and these correspond to the flow arrows A-E in Figure 9B.)

In these diagrams, where one flow arrow goes to multiple actions (e.g. see arrow leaving "App Launched by User" box), the actions are performed in order of top-to-bottom in the orientation shown in the diagram. That is, in the example of the arrow extending from the "App Launched by User" block, the app goes on to "Is Registered?" first, and then, if appropriate, "Setup Flow", "Check Location Permission Flow" etc.

As shown in Figure 9A, once the control app is installed at step S901 and then launched at step S902 by the user, the control app starts by determining whether the smart device 40 is registered with the server 50 at step S903.

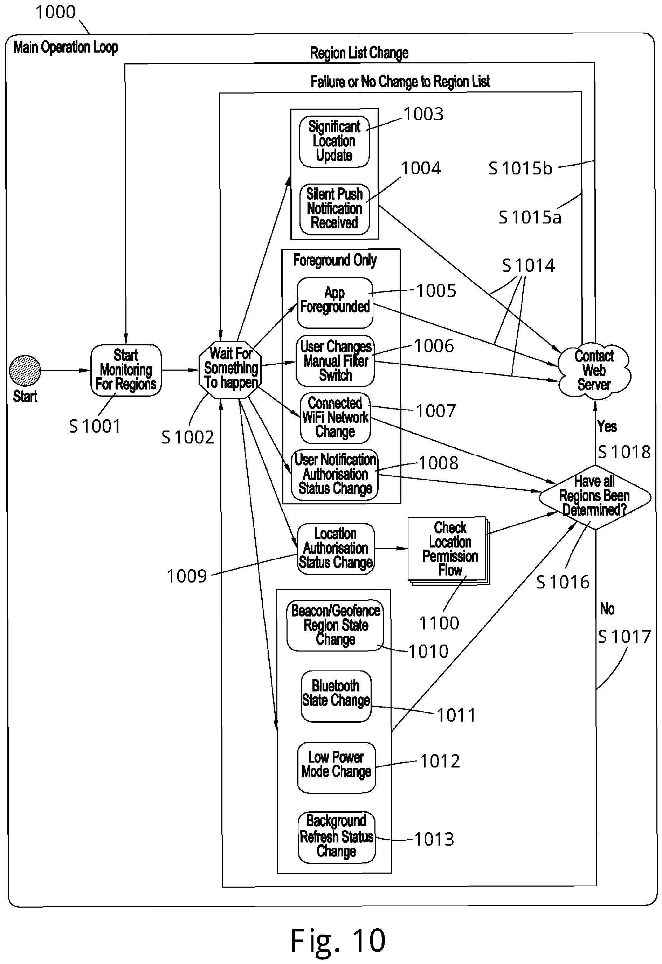

If so, the control app checks that it can contact the server 50 at step S904 and, if so, the control app enters the Main Operation loop 1000, discussed in detail below with respect to Figures 10-12B.

If the control app cannot contact the server 50, it outputs a failure/error message (step S905).

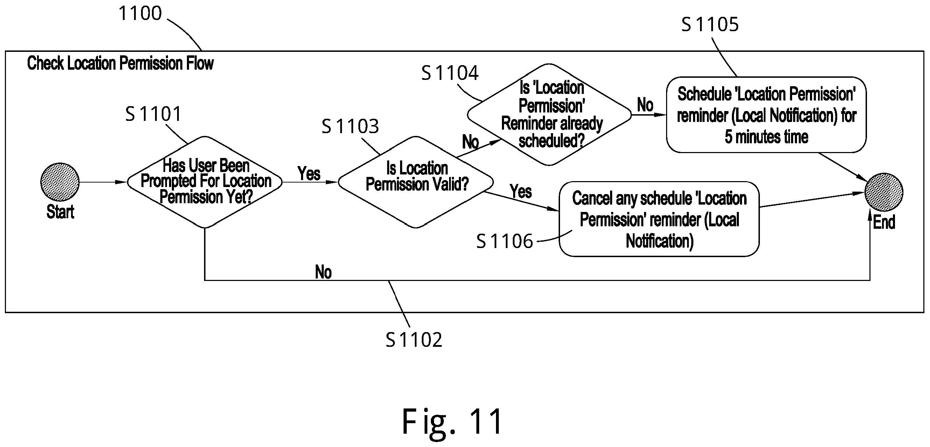

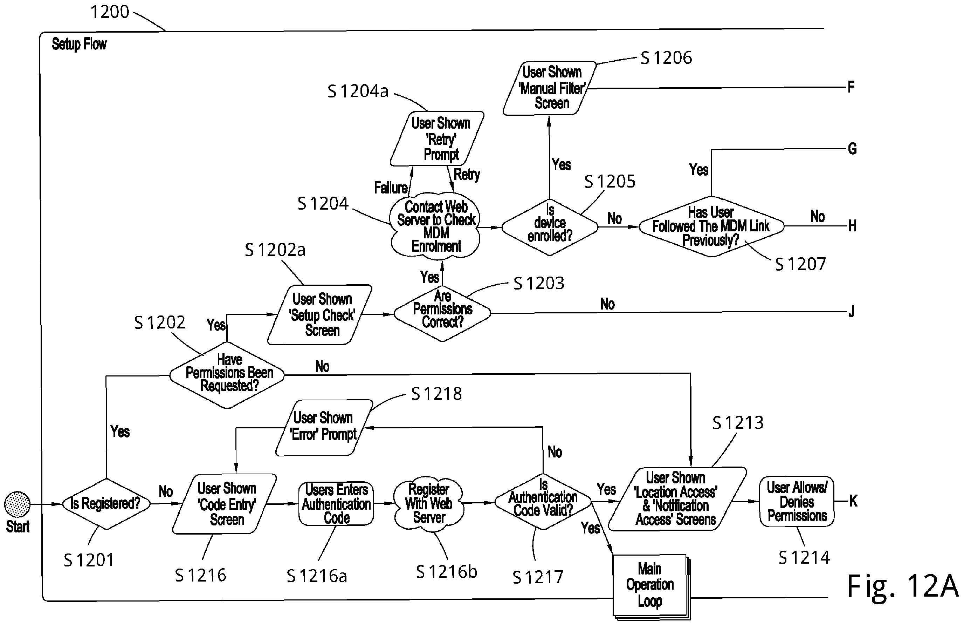

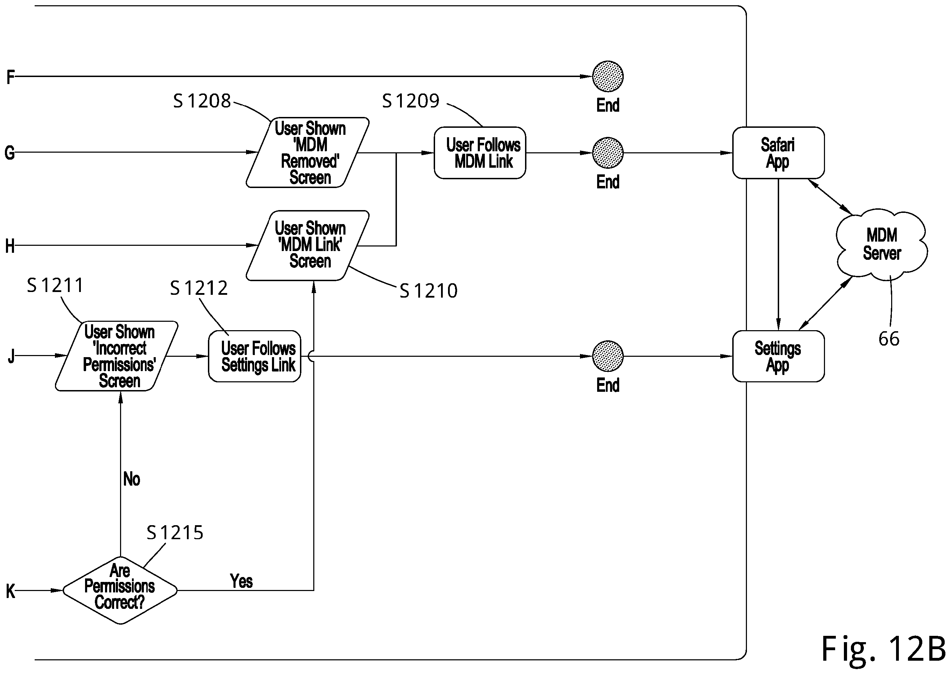

If the control app is not registered with the server 50, the control app first enters the Setup Flow 1200, described below with reference to Figures 12A and 12B, and then enters the Check Location Permission Flow 1100, described below with reference to Figure 11.

At step S906, if the app launch or foregrounding was caused by the user tapping the "Location Permission Reminder" (part of the Check Location Permission Flow, discussed below in relation to Figure 11), then, at step S907, the app redirects the user to the Settings app on the smart device 40 so that the user can set the necessary permissions.

These steps are performed in order each time the control app is launched or when it is foregrounded by the user.

Figure 9B depicts actions of the control app when it is running in the background. In this situation the flow starts at step S908 wherein the control app checks whether the smart device 40 is registered with the server 50 and, if so, it begins the Main Operation Loop 1000. If not, the control app attempts to contact the server 50 at step S904 and, if it cannot, it outputs a failure/error message (step S905), i.e. as above, when the app is foregrounded.

If the control app is not registered with the server 50, then the control app enters the Check Location Permission Flow 1100.

At step S908, if, while backgrounded, the control app is suspended by the OS for any reason, then the control app, , may be automatically relaunched (step S910) by the OS determining a significant location update has occurred, or by detecting entry of the smart device into/out of the predetermined region.

If the control app is terminated either by the user or by the OS (step S909), then the control app must be manually relaunched by the user (i.e. return to step S102) or restarted by a significant location update or by detecting entry of the smart device into/out of the predetermined region.

Figure 10 depicts the Main Operation Loop 1000 of the control app, i.e. its method of operation. The method starts at step S1001 with the control app on the smart device 40 monitoring for entry/exit into the predetermined region. Further, the control app waits (step S1002) in the operation loop for one of the following to happen:
An update from the server 50 that changes the predetermined region 1003;
A silent push notification from the server 50 is received 1004;
The control app being foregrounded by the user 1005;
The user changing a manual filter switch in the control app that allows the user to explicitly disable the app and any active filtering of apps 1006. Use of this switch by the user is logged at the server 50;
The smart device 40 changing to connect to a different Wi-Fi network 1007;
A change to the User Notification Authorisations 1008;
A change to the Location Permissions 1009 (i.e. authorization on the smart device 40 to use the Location Services) - at this point, the control app first enters the Check Location Permission Flow 1100;
A change to the beacon or geofence region state 1010 (i.e. entry into or exit from the predetermined region, as detected by the GPS receiver or by detecting/not-detecting a beacon of interest, i.e. a beacon that at least partially defines the predetermined region);
A change to the Bluethooth activation state on the smart device 40 1011 (i.e. turning a Bluetooth receiver on or off) or a change of a/the beacon to which the smart device is connected via Bluetooth or detection of a beacon of interest;
A change of the smart device to a low power mode 1012; or
Background Refresh Status Change 1013 (i.e. a setting changed by the user as to whether or not apps can be updated in the background).

At step S1014, if the control app detects one of: an update from the server 50 that changes the predetermined region 1003; a silent push notification from the server 50 1004; the control app being foregrounded by the user 1005; or the user changing a manual filter switch 1006, then the control app contacts the server 50 and awaits instructions therefrom. The server 50 then identifies whether or not the control app has failed or if there is no change to the region list (step S1015a). If the control app has not failed, the server 50 sends (step S1015a) to the control app an update to the region list, i.e. an update to the predetermined region(s).

If there is no change to the predetermined region, the control app returns to the step of waiting in the operation loop for one of the aforesaid events to happen (i.e. step S1002).

If there is a change to the predetermined region, the control app goes to the step of monitoring for entry into/exit from the new (i.e. updated) predetermined region (i.e. step S1001).

In any of the other aforesaid events 1007-1013 occurs, the control app checks to see whether all areas ("regions") have been determined at step S1016. The control app has a list of areas of interest (e.g. a GPS coordinate + radius, a list of Wi-Fi and Bluetooth beacons etc.) that make up the predetermined region. An area is flagged as "undetermined" when it is not currently clear to the app whether the smart device 40 is inside or outside that area (e.g. if the GPS receiver has not yet obtained an exact fix on the location of the smart device). An area is flagged as "determined" when the control app knows definitively whether or not the smart device 40 is within the predetermined region. If all regions have not been determined, the flow returns to step S1002. If all regions have been determined, the control app contacts the server 50 at step S1018.

Figure 11 shows the Check Location Permission Flow 1100. This Figure details the flow of steps when the control app requests the necessary Location Permissions (i.e. access to Location services) from a smart device 40 running iOS. Location services on iOS (and Android) smart devices 40 allow the location of the smart device 40 to be determined by detecting cellular data signals, Wi-Fi signals, GPS networks, and/or Bluetooth beacons, as described previously, and the control app is configured to use the Location services to determine the location of the smart device 40 with respect to the predetermined region(s).

The Check Location Permission Flow starts at step S1101 in which the control app first checks to see if the user has been previously prompted to provide the necessary location permissions.

If not, the flow ends (step S1102).

If so, the next step (step S1103) is the control app determining if the Location Permissions granted by the user are indeed those necessary for correct functioning of the control app.

If the permissions are not correct, the control app checks to see if a reminder is already scheduled to remind the user to set the correct location permissions on the OS at step S1104. If no reminder is set, the control app schedules a reminder to the user (step S1105) and the flow ends.

If the Location permissions are correct, then the control app cancels any pending reminders to the user regarding Location permissions for the control app (step S1106) and the flow ends.

Figures 12A and 12B depict the flow of steps for initially setting up the app on a smart device 40 running iOS. At "Start" the app is run for the first time and the app initially checks whether the smart device 40 is registered with a particular server 50. The process continues from there and is described in detail below. (Figures 12A and 12B are parts of the same flow diagram split over two pages. To clearly show the links, several flow arrows extending from steps shown in Figure 12A are marked F-K, and these correspond to the flow arrows F-K in Figure 12B. That is, for example, after the step of "User Allows/Denies Permissions", in Figure 12A, the flow diagram proceeds along arrow "K" to the step of "Are Permissions correct" shown in Figure 12B etc.) In this flow, the control app first checks if the smart device 40 is registered with the server 50 (step S1201). If so, the control app checks if the required app permissions have been previously requested (step S1202).

If so, user is shown the Setup Check screen S1212a and the control app then checks whether the permissions are correct (at step S1203) and, if so, the control app contacts the server 50 to check whether the smart device 40 is correctly enrolled in the MDM (at step S1204). If the device is incorrectly enrolled in the MDM, the user is shown a Retry prompt S1204a and step S1204 repeats.

Once it is determined the smart device 40 is enrolled (at step S1205) in the MOM, the user is shown the Manual Filter screen (step S1206) and the flow ends.

If the smart device 40 is not enrolled in the MDM, the control app determines if the user has previously followed the MDM link (step S1207) and, if so, the user is shown an "MDM Removed" message (step S1208) and is instructed to follow the MDM link (step S1209), at which point the flow ends and the user is left in the Safari app. If the user has not previously followed the MDM link, the MDM link is shown to the user (step S1210) and the user is instructed to follow it (step S1209), at which point the flow ends and the user is left in the Safari app. When the user is enrolled in the MDM, the iOS internet browser, Safari, mediates communication between the control app and the MDM server 66.

If the control app determines that the required app permissions are incorrect (at S1203), the user is informed accordingly (step S1211) and directed to the iOS settings app (step S1212) to correct this, at which point the flow ends and the user is left in the iOS settings app.

If the control app determined that the necessary permissions have not been requested (at step S1202), the control app directs the user to the relevant screens (e.g. Location Access and/or Notification Access screens) at step S1213, at which point the user allows or denies the permissions at step S1214. If the permissions are allowed, the control app checks if the permissions are correct at step S1215 and if not, the user is shown the "incorrect Permissions" screen at step S1211 and the flow proceeds from that step.

If the permissions are correct at step 1215, the user is shown the MDM link screen at step S1210 and the flow continues from that step.

If the permissions are denied, the user is again prompted to allow the correct permissions them and this repeats until they are accepted and the flow proceeds as above.

If the device is not registered, the user is prompted to enter an authorization code received from the server 50 at step S1216, the user enters said authorization code S1216a which the app registers with the server S1216b, which is then checked with the server 50 S1217. If the code is valid then the control app is registered with the server 50 and activity branches into two simultaneous streams: a first stream in which the app enters the Main Operation Loop, described above and a second stream that passes to Step 1213, described above. If the authentication code is invalid the user is shown an Error prompt S1218 and the flow returns to step S1216.

## Claims

1. A method of blocking one or more app(s) and/or feature(s) on a smart device (40), wherein the smart device comprises a GPS receiver and one or more wireless receiver devices; the method comprising, on the smart device:
detecting, by a control app running on the smart device, movement of the smart device into or out of a predetermined region (16) based on data received by the GPS receiver and/or one or more of the wireless receiver devices; and
blocking one or more app(s) and/or feature(s) on the smart device when the smart device is within the predetermined region;
wherein the smart device (40) is configured to communicate with a server (50); and the method **characterised by**:
the smart device (40) sending to the server (50) a set of current smart device parameters that are currently applied on or detected by the smart device;
wherein the set of parameters comprises: some or all current app permissions for the control app, the current activation state of one or more wireless receiver devices of the smart device, and the current state of a manual override switch of the control app in the smart device.

2. The method of claim 1, wherein the step of blocking comprises blocking all apps and/or features on the smart device except for one or more predetermined app(s) and/or feature(s) when the smart device (40) is within the predetermined region (16).

3. The method of any preceding claim, further comprising determining a current time; and
wherein the one or more app(s) and/or feature(s) is blocked when both the smart device (40) is within the predetermined region and the current time is within a predetermined time period.

4. The method as claimed in claim 1, comprising:
the control app sending data relating to movement of the smart device (40) into or out of the predetermined region (16) to the server (50);
the server (50) determining, based on this data, whether app(s) and/or feature(s) should be blocked on the smart device (40); and
the server (50) communicating with the smart device (40) to provide instructions to block app(s) and/or feature(s), wherein the blocking is carried out in response to these instructions.

5. The method of claim 1 or 4, further comprising the steps of:
the server (50) determining whether the current smart device parameters conform to a predetermined set of parameters; and
when the current smart device parameters do not conform to the predetermined set of parameters, sending a notification to the smart device to instruct the smart device (40) or a user of the smart device (40) to adjust the current device parameters applied on the smart device (40).

6. The method of claim 5 wherein, if the control app permissions are determined to not conform to the control app permissions of the predetermined set of parameters, the method comprises the step of the server pushing a notification to the smart device (40) to initiate communication with the server (50).

7. The method of claim 4, 5, or 6, comprising the step of the server (50) sending notifications to the smart device (40) to set or update the predetermined region (16).

8. The method of any of claims 1 and 4 to 7, wherein the smart device (40) is associated with a first user, and wherein the server (50) maintains a record of the current control app permissions; and
when the control app permissions are determined to not conform to the control app permissions of the predetermined set of parameters more than a predetermined number of times, the server sends an alert to a second user identifying the first user.

9. The method of any of claims 1 and 4 to 8, wherein the smart device (40) is associated with a first user, and wherein the server (50) maintains a record of a frequency with which the smart device (40) communicated with the server (50); and
when the frequency drops below a predetermined frequency, the server (50) sends an alert to a second user identifying the first user.

10. The method of any of claims 1 and 4 to 9, wherein the smart device (40) is associated with a first user, and wherein the server (50) maintains a record of the last time that the smart device (40) communicates with the server (50); and
when a duration since the last time that the smart device (40) communicates with the server (50) exceeds a predetermined duration, the server (50) sends an alert to a second user identifying the first user.

11. A smart device (40) comprising a GPS receiver and one or more wireless receiver devices; the smart device being configured to: detect, by a control app (42a,b) running on the smart device, movement of the smart device (40) into or out of a predetermined region based on data received by the GPS receiver and/or one or more of the wireless receiver devices; and to block one or more app(s) and/or feature(s) on the smart device when the smart device is within the predetermined region;
and **characterised by**:
the smart device configured to send to a server (50) a set of current smart device parameters that are currently applied on or detected by the smart device;
wherein the set of parameters comprises: some or all current app permissions for the control app, the current activation state of one or more wireless receiver devices of the smart device, and the current state of a manual override switch of the control app in the smart device.

12. A system comprising the smart device (40) of claim 11 and a server (50)
wherein the smart device is configured to communicate with the server when sending the set of current smart device parameters.

13. The system of claim 12, wherein the server (50) contains editable computer-executable instructions to define the predetermined region;
and wherein the server contains editable computer-executed instructions to communicate with the smart device to set the predetermined region.

14. The system of claim 12 or 13, wherein the server (50) and/or the smart device (40) comprises a clock, and wherein the computer-executable instructions of the smart device block one or more app(s) and/or feature(s) on the smart device additionally based on whether a current time of the clock is within a pre-determined time period.

15. The system according to claim 12, 13, or 14, wherein the or each wireless receiver device is one of a Bluetooth receiver device, a Wi-Fi receiver device, and a cellular network receiver device.

## Patentansprüche

1. Verfahren zum Blockieren einer oder mehrerer App(s) und/oder Funktion(en) auf einer intelligenten Vorrichtung (40), wobei die intelligente Vorrichtung einen GPS-Empfänger und eine oder mehrere drahtlose Empfangsvorrichtungen umfasst; wobei das Verfahren auf der intelligenten Vorrichtung Folgendes umfasst:
Erkennen, durch eine auf der intelligenten Vorrichtung ausgeführte Steuerungs-App, einer Bewegung der intelligenten Vorrichtung in oder aus einem vorbestimmten Bereich (16) basierend auf Daten, die von dem GPS-Empfänger und/oder einer oder mehreren der drahtlosen Empfangsvorrichtungen empfangen werden; und
Blockieren einer oder mehrerer App(s) und/oder Funktion(en) auf der intelligenten Vorrichtung, wenn sich die intelligente Vorrichtung innerhalb des vorbestimmten Bereichs befindet;
wobei die intelligente Vorrichtung (40) konfiguriert ist, mit einem Server (50) zu kommunizieren; und das Verfahren **dadurch gekennzeichnet ist, dass**
die intelligente Vorrichtung (40) an den Server (50) einen Satz aktueller Parameter der intelligenten Vorrichtung sendet, die aktuell auf die intelligente Vorrichtung angewendet oder von dieser erkannt werden;
wobei der Satz von Parametern Folgendes umfasst: einige oder alle aktuellen App-Berechtigungen für die Steuerungs-App, den aktuellen Aktivierungsstatus einer oder mehrerer drahtloser Empfangsvorrichtungen der intelligenten Vorrichtung und den aktuellen Status eines manuellen Überbrückungsschalters der Steuerungs-App in der intelligenten Vorrichtung.

2. Verfahren nach Anspruch 1, wobei der Schritt zum Blockieren ein Blockieren aller Apps und/oder Funktionen auf der intelligenten Vorrichtung mit Ausnahme einer oder mehrerer vorbestimmter App(s) und/oder Funktion(en) umfasst, wenn sich die intelligente Vorrichtung (40) innerhalb des vorbestimmten Bereichs (16) befindet.

3. Verfahren nach einem vorstehenden Anspruch, weiter umfassend Bestimmen einer aktuellen Zeit; und
wobei die eine oder mehreren App(s) und/oder Funktion(en) blockiert werden, wenn sich sowohl die intelligente Vorrichtung (40) innerhalb des vorbestimmten Bereichs befindet als auch die aktuelle Zeit innerhalb eines vorbestimmten Zeitraums liegt.

4. Verfahren nach Anspruch 1, umfassend:
die Steuerungs-App sendet Daten bezüglich einer Bewegung der intelligenten Vorrichtung (40) in den oder aus dem vorbestimmten Bereich (16) an den Server (50);
der Server (50) bestimmt anhand dieser Daten, ob App(s) und/oder Funktion(en) auf der intelligenten Vorrichtung (40) blockiert werden sollten; und
der Server (50) kommuniziert mit der intelligenten Vorrichtung (40), um Anweisungen zum Blockieren von App(s) und/oder Funktion(en) bereitzustellen, wobei das Blockieren als Reaktion auf diese Anweisungen erfolgt.

5. Verfahren nach Anspruch 1 oder 4, weiter umfassend die folgenden Schritte:
Bestimmen durch den Server (50), ob die aktuellen Parameter der intelligenten Vorrichtung einem vorbestimmten Satz von Parametern entsprechen; und
wenn die aktuellen Parameter der intelligenten Vorrichtung nicht dem vorbestimmten Satz von Parametern entsprechen, Senden einer Benachrichtigung an die intelligente Vorrichtung, um die intelligente Vorrichtung (40) oder einen Benutzer der intelligenten Vorrichtung (40) anzuweisen, die auf die intelligente Vorrichtung (40) angewendeten aktuellen Vorrichtungsparameter anzupassen.

6. Verfahren nach Anspruch 5, wobei, wenn bestimmt wird, dass die Steuerungs-App-Berechtigungen nicht den Steuerungs-App-Berechtigungen des vorbestimmten Satzes von Parametern entsprechen, das Verfahren den Schritt umfasst, dass der Server eine Benachrichtigung an die intelligente Vorrichtung (40) sendet, um Kommunikation mit dem Server (50) einzuleiten.

7. Verfahren nach Anspruch 4, 5 oder 6, umfassend den Schritt, dass der Server (50) Benachrichtigungen an die intelligente Vorrichtung (40) sendet, um den vorbestimmten Bereich (16) festzulegen oder zu aktualisieren.

8. Verfahren nach einem der Ansprüche 1 und 4 bis 7, wobei die intelligente Vorrichtung (40) einem ersten Benutzer zugeordnet ist und wobei der Server (50) eine Aufzeichnung der aktuellen Steuerungs-App-Berechtigungen führt; und
wenn bestimmt wird, dass die Steuerungs-App-Berechtigungen mehr als eine vorbestimmte Anzahl von Malen nicht den Steuerungs-App-Berechtigungen des vorbestimmten Satzes von Parametern entsprechen, der Server eine Warnung an einen zweiten Benutzer sendet, die den ersten Benutzer identifiziert.

9. Verfahren nach einem der Ansprüche 1 und 4 bis 8, wobei die intelligente Vorrichtung (40) einem ersten Benutzer zugeordnet ist und wobei der Server (50) eine Aufzeichnung einer Häufigkeit führt, mit der die intelligente Vorrichtung (40) mit dem Server (50) kommuniziert hat; und
wenn die Häufigkeit unter eine vorbestimmte Häufigkeit fällt, der Server (50) eine Warnung an einen zweiten Benutzer sendet, die den ersten Benutzer identifiziert.

10. Verfahren nach einem der Ansprüche 1 und 4 bis 9, wobei die intelligente Vorrichtung (40) einem ersten Benutzer zugeordnet ist und wobei der Server (50) eine Aufzeichnung darüber führt, wann die intelligente Vorrichtung (40) das letzte Mal mit dem Server (50) kommuniziert hat; und
wenn eine Zeitspanne seit der letzten Kommunikation der intelligenten Vorrichtung (40) mit dem Server (50) eine vorbestimmte Zeitspanne überschreitet, der Server (50) eine Warnung an einen zweiten Benutzer sendet, die den ersten Benutzer identifiziert.

11. Intelligente Vorrichtung (40), die einen GPS-Empfänger und eine oder mehrere drahtlose Empfangsvorrichtungen umfasst; wobei die intelligente Vorrichtung konfiguriert ist zum: Erkennen, durch eine auf der intelligenten Vorrichtung ausgeführte Steuerungs-App (42a, b), einer Bewegung der intelligenten Vorrichtung (40) in oder aus einem vorbestimmten Bereich, basierend auf Daten, die von dem GPS-Empfänger und/oder einer oder mehreren der drahtlosen Empfangsvorrichtungen empfangen werden; und Blockieren einer oder mehrerer App(s) und/oder Funktion(en) auf der intelligenten Vorrichtung, wenn sich die intelligente Vorrichtung innerhalb des vorbestimmten Bereichs befindet;
und **dadurch gekennzeichnet, dass**:
die intelligente Vorrichtung konfiguriert ist, einen Satz aktueller Parameter der intelligenten Vorrichtung an einen Server (50) zu senden, die aktuell auf die intelligente Vorrichtung angewendet oder von dieser erkannt werden;
wobei der Satz von Parametern Folgendes umfasst: einige oder alle aktuellen App-Berechtigungen für die Steuerungs-App, den aktuellen Aktivierungsstatus einer oder mehrerer drahtloser Empfangsvorrichtungen der intelligenten Vorrichtung und den aktuellen Status eines manuellen Überbrückungsschalters der Steuerungs-App in der intelligenten Vorrichtung.

12. System, das die intelligente Vorrichtung (40) nach Anspruch 11 und einen Server (50) umfasst, wobei die intelligente Vorrichtung konfiguriert ist, mit dem Server zu kommunizieren, wenn sie den Satz aktueller Parameter der intelligenten Vorrichtung sendet.

13. System nach Anspruch 12, wobei der Server (50) editierbare, computerausführbare Anweisungen zum Definieren des vorbestimmten Bereichs enthält;
und wobei der Server editierbare computerausgeführte Anweisungen zur Kommunikation mit der intelligenten Vorrichtung enthält, um den vorbestimmten Bereich festzulegen.

14. System nach Anspruch 12 oder 13, wobei der Server (50) und/oder die intelligente Vorrichtung (40) eine Uhr umfassen und wobei die computerausführbaren Anweisungen der intelligenten Vorrichtung eine oder mehrere App(s) und/oder Funktion(en) auf der intelligenten Vorrichtung zusätzlich basierend darauf blockieren, ob eine aktuelle Uhrzeit der Uhr innerhalb eines vorbestimmten Zeitraums liegt.

15. System nach Anspruch 12, 13 oder 14, wobei die oder jede drahtlose Empfangsvorrichtung eine von einer Bluetooth-Empfangsvorrichtung, einer Wi-Fi-Empfangsvorrichtung und einer Mobilfunknetz-Empfangsvorrichtung ist.

## Revendications

1. Procédé pour bloquer une ou plusieurs applications et/ou fonctionnalités sur un dispositif intelligent (40), dans lequel le dispositif intelligent comprend un récepteur GPS et un ou plusieurs dispositifs récepteurs sans fil ; le procédé comprenant, sur le dispositif intelligent :
la détection, par une application de commande exécutée sur le dispositif intelligent, d'un mouvement du dispositif intelligent entrant dans une région prédéterminée (16) ou sortant de cette dernière, sur la base de données reçues par le récepteur GPS et/ou un ou plusieurs des dispositifs récepteurs sans fil ; et
le blocage d'une ou de plusieurs applications et/ou fonctionnalités sur le dispositif intelligent lorsque le dispositif intelligent est à l'intérieur de la région prédéterminée ;
dans lequel le dispositif intelligent (40) est configuré pour communiquer avec un serveur (50) ; et le procédé étant **caractérisé par** :
le dispositif intelligent (40) envoyant au serveur (50) un ensemble de paramètres actuels de dispositif intelligent qui sont actuellement appliqués sur, ou détectés par, le dispositif intelligent ;
dans lequel l'ensemble de paramètres comprend : certaines ou la totalité des autorisations d'application actuelles pour l'application de commande, l'état d'activation actuel d'un ou de plusieurs dispositifs récepteurs sans fil du dispositif intelligent et l'état actuel d'un commutateur de surpassement manuel de l'application de commande dans le dispositif intelligent.

2. Procédé selon la revendication 1, dans lequel l'étape du blocage comprend le blocage de toutes les applications et/ou fonctionnalités sur le dispositif intelligent, à l'exception d'une ou de plusieurs applications et/ou fonctionnalités prédéterminées lorsque le dispositif intelligent (40) est à l'intérieur de la région prédéterminée (16).

3. Procédé selon une quelconque revendication précédente, comprenant en outre la détermination d'un temps actuel ; et
dans lequel les une ou plusieurs applications et/ou fonctionnalités sont bloquées lorsque le dispositif intelligent (40) est à l'intérieur de la région prédéterminée et que le temps actuel est au sein d'une période prédéterminée.

4. Procédé selon la revendication 1, comprenant :
l'application de commande envoyant des données concernant un mouvement du dispositif intelligent (40) entrant dans la région prédéterminée (16), ou sortant de cette dernière, au serveur (50) ;
le serveur (50) déterminant, sur la base de ces données, si une ou des applications et/ou fonctionnalités doivent être bloquées sur le dispositif intelligent (40) ; et
le serveur (50) communiquant avec le dispositif intelligent (40) pour fournir des instructions pour bloquer une ou des applications et/ou fonctionnalités, le blocage étant réalisé en réponse à ces instructions.

5. Procédé selon la revendication 1 ou 4, comprenant en outre les étapes de :
détermination par le serveur (50) si les paramètres actuels de dispositif intelligent sont conformes ou non à un ensemble prédéterminé de paramètres ; et
lorsque les paramètres actuels de dispositif intelligent ne sont pas conformes à l'ensemble prédéterminé de paramètres, envoi d'une notification au dispositif intelligent pour donner l'ordre au dispositif intelligent (40) ou à un utilisateur du dispositif intelligent (40) d'ajuster les paramètres actuels de dispositif appliqués sur le dispositif intelligent (40).

6. Procédé selon la revendication 5 dans lequel, s'il est déterminé que les autorisations d'application de commande ne sont pas conformes aux autorisations d'application de commande de l'ensemble prédéterminé de paramètres, le procédé comprend l'étape de poussée, par le serveur, d'une notification au dispositif intelligent (40) pour initier une communication avec le serveur (50).

7. Procédé selon la revendication 4, 5, ou 6, comprenant l'étape de l'envoi, par le serveur (50), de notifications au dispositif intelligent (40) pour définir ou mettre à jour la région prédéterminée (16).

8. Procédé selon l'une quelconque des revendications 1 et 4 à 7, dans lequel le dispositif intelligent (40) est associé à un premier utilisateur, et dans lequel le serveur (50) conserve un enregistrement des autorisations actuelles d'application de commande ; et
lorsqu'il est déterminé que les autorisations d'application de commande ne sont pas conformes aux autorisations d'application de commande de l'ensemble prédéterminé de paramètres plus d'un nombre prédéterminé de fois, le serveur envoie une alerte à un second utilisateur identifiant le premier utilisateur.

9. Procédé selon l'une quelconque des revendications 1 et 4 à 8, dans lequel le dispositif intelligent (40) est associé à un premier utilisateur, et dans lequel le serveur (50) conserve un enregistrement d'une fréquence à laquelle le dispositif intelligent (40) a communiqué avec le serveur (50); et
lorsque la fréquence devient inférieure à une fréquence prédéterminée, le serveur (50) envoie une alerte à un second utilisateur identifiant le premier utilisateur.

10. Procédé selon l'une quelconque des revendications 1 et 4 à 9, dans lequel le dispositif intelligent (40) est associé à un premier utilisateur, et dans lequel le serveur (50) conserve un enregistrement de la dernière fois où le dispositif intelligent (40) a communiqué avec le serveur (50); et
lorsqu'une durée depuis la dernière fois où le dispositif intelligent (40) a communiqué avec le serveur (50) dépasse une durée prédéterminée, le serveur (50) envoie une alerte à un second utilisateur identifiant le premier utilisateur.

11. Dispositif intelligent (40) comprenant un récepteur GPS et un ou plusieurs dispositifs récepteurs sans fil ; le dispositif intelligent étant configuré pour : détecter, par une application de commande (42a, b) exécutée sur le dispositif intelligent, un mouvement du dispositif intelligent (40) entrant dans une région prédéterminée, ou sortant de cette dernière, sur la base de données reçues par le récepteur GPS et/ou un ou plusieurs des dispositifs récepteurs sans fil ; et pour bloquer une ou plusieurs applications et/ou fonctionnalités sur le dispositif intelligent lorsque le dispositif intelligent est à l'intérieur de la région prédéterminée ;
et **caractérisé en ce que** :
le dispositif intelligent est configuré pour envoyer à un serveur (50) un ensemble de paramètres actuels de dispositif intelligent qui sont actuellement appliqués sur ou détectés par le dispositif intelligent ;
dans lequel l'ensemble de paramètres comprend : certaines ou la totalité des autorisations d'application actuelles pour l'application de commande, l'état d'activation actuel d'un ou plusieurs dispositifs récepteurs sans fil du dispositif intelligent et l'état actuel d'un commutateur de priorité manuel de l'application de commande dans le dispositif intelligent.

12. Système comprenant le dispositif intelligent (40) selon la revendication 11 et un serveur (50), dans lequel le dispositif intelligent est configuré pour communiquer avec le serveur lors de l'envoi de l'ensemble de paramètres actuels de dispositif intelligent.

13. Système selon la revendication 12, dans lequel le serveur (50) contient des instructions modifiables et exécutables par ordinateur pour définir la région prédéterminée ;
et dans lequel le serveur contient des instructions modifiables exécutées par ordinateur pour communiquer avec le dispositif intelligent afin de définir la région prédéterminée.

14. Système selon la revendication 12 ou 13, dans lequel le serveur (50) et/ou le dispositif intelligent (40) comprennent une horloge et dans lequel les instructions exécutables par ordinateur du dispositif intelligent bloquent une ou plusieurs applications et/ou fonctionnalités sur le dispositif intelligent selon que, de plus, un temps actuel de l'horloge est ou non au sein d'une période prédéterminée.

15. Système selon la revendication 12, 13, ou 14, dans lequel le ou chaque dispositif récepteur sans fil est l'un parmi un dispositif récepteur Bluetooth, un dispositif récepteur Wi-Fi et un dispositif récepteur de réseau cellulaire.
